# EUROPEAN PATENT APPLICATION

(11) **EP 4 349 878 A1**
(43) Date of publication of application: **10.04.2024**
(21) Application number: 22306484.1
(22) Date of filing: 05.10.2022
(51) Int. Cl.: C08G 18/22, C08G 18/24, C08G 18/38, C08G 18/40, C08G 18/44, C08G 18/72, C08G 18/73, C08G 18/78, C08G 18/79, C09J 175/08

(54) **A TWO-COMPONENT POLYURETHANE FOR POLYCARBONATE BONDING**

(71) Applicant: ARKEMA FRANCE, 92700 Colombes (FR)
(72) Inventor: VEITCH, Michael, Worcestershire, DY10 1TP (GB); VENGADA, Valarmathy, Worcestershire, DY11 6UB (GB); SMITH, Bradley, Malvern, WR141 JH (GB)
(74) Representative: Arkema Patent

(57) **Abstract**

The present invention relates to a two-component polyurethane composition for polycarbonate bonding, a method of bonding to a polycarbonate substrate with the composition, and a method of preparing the composition. The two-component polyurethane composition comprises at least one polycarbonate polyol, (ii) an amine free catalyst, and (iii) optionally, at least one aliphatic monomeric isocyanate compound; and at least one isocyanate component. The polyurethane composition is free of an aromatic isocyanate compound. Also disclosed is the use of the composition in adhesive, coating, primer, paint and varnish based compositions.

## Description

### FIELD OF THE INVENTION

The presently disclosed process(es), procedure(s), method(s), product(s), result(s), and/or concept(s) (collectively referred to hereinafter as the "present disclosure or invention") relates generally to a two-component polyurethane adhesive composition for polycarbonate bonding, a method of bonding to a polycarbonate substrate with the composition, and a method of preparing the composition.

### BACKGROUND OF THE INVENTION

The present invention relates to structural engineering adhesives for bonding metal, plastics and fiber-reinforced composite parts (e.g. sheet molding compounds (SMC), fiberglass reinforced polyesters (FRP), structural reaction injected molded (SRIM), resin transfer moldings (RTM), plastics, and the like) to a variety of similar and dissimilar substrates, which find particular in the manufacture of cars, trucks, boats, and a host of other products.

One typical class of structural adhesives useful in adhering composite parts to the same and to different substrates is two-part polyurethane adhesives. Combining a prepolymer and a curative just before use makes these materials useful as adhesives. The ratio in which these materials are combined will vary depending upon the functionality of the prepolymer and the curative. Accurate combination of the materials requires a certain skill level of the worker and, unfortunately, there is substantial waste of adhesive during the mixing process even when using automatic pumping equipment. In addition, polyurethane adhesives generally have poor thermal properties and are not conducive to applications requiring high temperature ovens.

Another common class of structural adhesives useful in adhering metal parts to the same and to different substrates (e.g., composites) is epoxy adhesives. Epoxy adhesive compositions most often contain a polyfunctional epoxy resin and are cured by addition of a curative, which typically is provided in a separate package. The rate of cure and product characteristics are influenced by the choice of curing agent, which itself is influenced by the make-up of the adhesive composition, as dictated by the final properties desired by the user.

Structural polyurethane adhesives compositions are used by application to the surface of a part made of, e.g., metal, plastic, and positioning a surface of a second part (of the same or different material) over the adhesive covered surface of the metal/plastic. Since the parts often have uneven surfaces, it is desirable that the adhesive possess the ability to fill the resulting voids of varying depth.

Many of these polyurethane adhesive compositions also have some systemic disadvantages. One of the most serious disadvantages is the residual monomer content of isocyanates, especially the more volatile diisocyanates. These are very dangerous to health and lead to a labeling obligation for MDI products to list hazard classification R40 / H351 (Suspected of causing cancer). The labeling obligation involves special measures for packaging and transport. The presence of monomeric, unreacted diisocyanate often leads to problems in further processing. Thus, such diisocyanates can migrate from the coating or bond into the coated or bonded materials. In the future, MDI-containing products with more than 0.1% residual monomer content, may no longer be available to DIY customers (DIY = "do it yourself") and may be given a self-service ban. Therefore, there is a strong interest in reactive polymers without or at least with very much reduced residual MDI contents, so that there is no or at least reduced health hazard potential of the products for the user. An alternative to MDI is to use hexamethylene diisocyanate (HDI) oligomers and polymers. These HDIs have the advantage of not being carcinogenic and do not have the H351 hazard classification, unlike MDIs.

Having good adhesion to PC (polycarbonate) and PC blends is a difficult challenge for conventional polyurethanes, especially after hot humid ageing conditions, such as cataplasma testing. The invention uses polycarbonate polyol as a raw material to improve adhesion to PC substrates, following from the chemical principle of "like attracts like". PC can undergo hydrolysis when in contact with moisture at high temperature, this reaction is catalysed by basic conditions e.g. in the presence of amines. Many contemporary catalysts are amine based; the invention avoids the use of these amine catalysts to prevent hydrolysing PC substrates.

EP2462177 describes a mixture of radiation-curable, water-dispersible polyurethanes, comprising at least one radiation-curable water-dispersible polyurethane.

WO2005/0007721 describes the use of mixtures of low-monomer NCO terminated prepolymers, i.e., liberated from monomers reaction products of polyols and stoichiometric excess of diphenylmethane diisocyanate, demonomerized polyphenylene polymethylene polyisocyanate, trimerized hexamethylene diisocyanate, and diluents.

EP285859 describes a reaction curable composition comprising, as reactive materials, a polyisocyanate component comprising a diisocyanate and a tri or higher functional polyisocyanate and having an average equivalent molecular weight from 120 to 240, and a polyol component comprising a diol and a tri or higher functional polyol and having an average equivalent molecular weight of from 100 to 550.

Bostik Pliogrip^{™} Impact adhesive and Pliogrip^{™} Evolution adhesive are Bostik's MDI-free polyurethane structural adhesives. They provide superior adhesion and eliminate the need for other primers and pre-surface treatments.

Despite the aforementioned prior art for reducing the monomeric diisocyanates, there is still a need for polyurethane adhesive compositions free of an aromatic isocyanate compound and useful as adhesives for sealants, coatings, primers, paints and varnishes.

Accordingly, the primary objective of the present invention is to provide a two-component polyurethane composition free of an aromatic isocyanate compound useful as adhesives for sealants, coatings, primers, painst and varnishes.

### SUMMARY OF THE INVENTION

The present disclosure provides a two-component polyurethane composition for thermoset and thermoplastic bonding, a method of bonding to a thermoset and/or thermoplastic with the composition, and a method of preparing the composition. Examples of thermosets and thermoplastics include, but are not limited to, polycarbonate, polycarbonate blends such as polycarbonate polyethylene terephthalate, polycarbonate acrylonitrile butadiene styrene, and polycarbonate acrylonitrile styrene acrylate.

One objective of the present disclosure relates to a two-component polyurethane composition comprising: (A) a polyol component comprising: (i) at least one polycarbonate polyol, (ii) an amine free catalyst, and (iii) optionally, at least one aliphatic monomeric isocyanate compound; (B) at least one isocyanate component selected from the group consisting of: (i) an aliphatic oligomeric isocyanate compound, (ii) an aliphatic polymeric isocyanate compound, and combinations thereof; and wherein the polyurethane composition is free of an aromatic isocyanate compound.

One more objective of the present disclosure relates to a two-component polyurethane composition that is free of an aromatic isocyanate compound selected from the group consisting of diphenylmethane diisocyanate (MDI), toluene diisocyanate (TDI), naphthalene diisocyanate, diisocyanato benzene, triisocyanato benzene, triisocyanato methylbenzene, bis(isocyanato methyl)benzene, and combinations thereof.

Another objective of the present disclosure relates to a two-component polyurethane composition useful as an adhesive, coating, primer, paint and varnish.

One more objective of the present disclosure relates to a two-component polyurethane adhesive composition comprising (A) a polyol component comprising: (i) at least one polycarbonate polyol, (ii) an amine free catalyst, and (iii) optionally, at least one aliphatic monomeric isocyanate compound; (B) at least one isocyanate component selected from the group consisting of: (i) an aliphatic oligomeric isocyanate compound, (ii) an aliphatic polymeric isocyanate compound, and combinations thereof; and wherein the polyurethane composition is free of an aromatic isocyanate compound.

These and other objects of the present disclosure will become apparent in light of the following disclosure.

### BRIEF DESCRIPTION OF THE DRAWINGS

It is believed that the present disclosure will be better understood from the following description taken in conjunction with the accompanying drawings. The referenced drawings are not to be construed as limiting the scope of present invention.
**FIG. 1****:** Lap shear failure mode descriptions.
**FIG. 2A****:** Adhesive with prepolymer version lap shear strength.
**FIG. 2B****:** Adhesive with prepolymer version failure mode.
**FIG. 3A****:** Adhesive without prepolymer version lap shear strength.
**FIG. 3B****:** Adhesive without prepolymer version failure mode.
**FIG. 4A****:** Failure mode picture on PC-PET after 7D cataplasma - prepolymer version.
**FIG. 4B****:** Failure mode picture on PC-ABS after 7D cataplasma - prepolymer version.
**FIG. 4C****:** Failure mode picture on PC after 7D cataplasma - prepolymer version.
**FIG. 5A****:** Failure mode picture on PC-PET after 7D cataplasma - no prepolymer version.
**FIG. 5B****:** Failure mode picture on PC-ABS after 7D cataplasma - no prepolymer version.
**FIG. 5C****:** Failure mode picture on PC after 7D cataplasma - no prepolymer version.

### DETAILED DESCRIPTION OF THE INVENTION

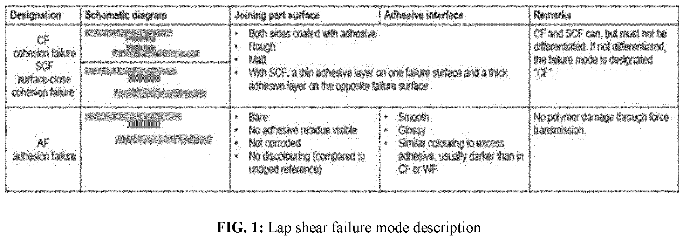

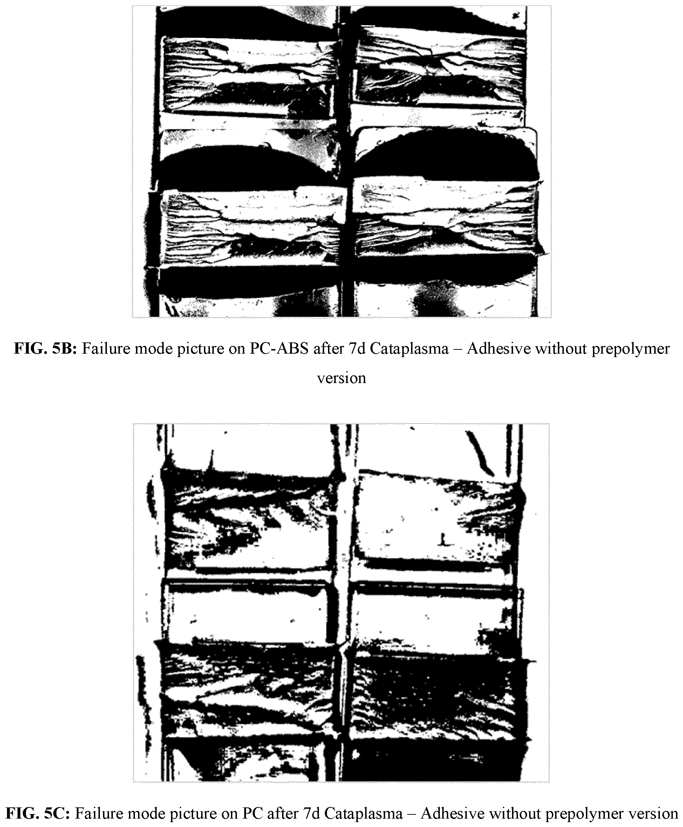

An exemplary embodiment of the present disclosure will now be described with reference to **FIG. 1** **TO 5C**

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations can be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" can mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects.

References herein to "one embodiment," or "one aspect" or "one version" or "one objective" or "another embodiment," or "another aspect" or "another version" or "another objective" of the invention can include one or more of such embodiment, aspect, version or objective, unless the context clearly dictates otherwise.

The term "at least one" refers to one as well as any quantity more than one, including but not limited to, 1, 2, 3, 4, 5, 10, 15, 20, 30, 40, 50, 100, etc. The term "at least one" can extend up to 100 or 1000 or more depending on the term to which it is attached.

All percentages, parts, proportions, and ratios as used herein are by weight of the total composition, unless otherwise specified. All such weights as they pertain to listed ingredients are based on the active level and therefore do not include solvents or by-products that can be included in commercially available materials, unless otherwise specified.

All references to singular characteristics or limitations of the present invention shall include the corresponding plural characteristics or limitations, and *vice-versa,* unless otherwise specified or clearly implied to the contrary by the context in which the reference is made.

Numerical ranges as used herein are intended to include every number and subset of numbers contained within that range, whether specifically disclosed or not. Further, these numerical ranges should be construed as providing support for a claim directed to any number or subset of numbers in that range.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof' and "and/or combinations thereof' as used herein refer to all permutations and combinations of the listed items preceding the term. For example, "A, B, C, or combinations thereof' is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that can vary depending upon the desired properties to be obtained in carrying out the invention.

The term "or combinations thereof', "and combinations thereof', and "combinations thereof' as used herein refers to all permutations and combinations of the listed items preceding the term.

The term "about" refers to a range of values ± 10% of a specified value. For example, the phrase "about 200" includes ± 10% of 200, or from 180 to 220.

The term "polymerization" or "polymerizing" refers to methods for chemically reacting monomer compounds to form polymer chains. The type of polymerization method can be selected from a wide variety of methods and include the following non-limiting examples: poly condensation, step growth polymerization, and free radical polymerization.

With respect to the amine free catalyst, the term "free of' refers to the composition of no more than 0.05 wt% of an amine, preferably no more than 0.01 wt% of an amine, further preferably no more than trace amounts and even more preferably below current detection limits.
The expression « polyurethane composition is free of an aromatic isocyanate compound » means that the composition comprises no more than 1wt% of an aromatic isocyanate compound, preferably no more than 0.05 wt%, further preferably no more than 0.1 wt%, even more preferably no more than trace compounds, and even more advantageously below current detection limits.

The present disclosure is directed to a two-component polyurethane composition comprising: (A) a polyol component comprising: (i) at least one polycarbonate polyol, (ii) an amine free catalyst, and (iii) optionally, at least one aliphatic monomeric isocyanate compound; (B) at least one isocyanate component selected from the group consisting of: (i) an aliphatic oligomeric isocyanate compound, (ii) an aliphatic polymeric isocyanate compound, and combinations thereof; and wherein the polyurethane composition is free of an aromatic isocyanate compound.

According to one more embodiment, the aliphatic monomeric isocyanate compound has monomeric units of formula of R(NCO)ₙ; wherein n = 2, 3, or 4; and R=an aliphatic moiety having from about 2 to about 20 carbon atoms. In a non-limiting embodiment of the present application the number of carbon atom(s) present can be in the range of from 2 to 5; from 6 to 10; from 11 to 15; from 16 to 20.

According to another embodiment, the aliphatic monomeric isocyanate compound is selected from the group consisting of isophorone diisocyanate (IPDI), dicyclohexylmethane-4,4'-diisocyanate, hexamethylene-1,6-diisocyanate (HDI), cyclohexylene diisocyanate, diisocyanato methylcyclohexane, bis(isocyanato methyl)cyclohexane, diisocyanato ethane, diisocyanato propane, diisocyanato butane, diisocyanato pentane, diisocyanato octane, diisocyanato decane, diisocyanato dodecane, 4,4'-HMDI, lysine diisocyanate and combinations thereof.

According to one more embodiment of the present disclosure, the aliphatic monomeric isocyanate compound is present in an amount of from about 0.5% w/w to about 5% w/w of the polyol component of the present application.

According to another embodiment, the aliphatic monomeric isocyanate compound is present in an amount of from about 0.5 wt.% to about 1 wt.%, about 1.1 wt.% to about 2 wt.%, about 2.1 wt.% to about 3 wt.%, about 3.1 wt.% to about 4 wt.%, and about 4.1 wt.% to about 5 wt.% of the polyol components of the present application.

According to another embodiment of the present disclosure, the aliphatic oligomeric isocyanate compound has monomeric unit(s) of formula of R(NCO)ₙ; wherein n = 2, 3, or 4; R=an aliphatic moiety having from about 6 to about 21 carbon atoms, and contains at least 2 to 15 repeating monomeric units.

According to another embodiment, the aliphatic oligomeric isocyanate compound has monomeric units of formula of R(NCO)ₙ; wherein n = 2, 3 or 4; R=an aliphatic moiety having the from about 6 to about 10, from about 11 to about 15, from about 16 to about 20, or from about 20 to about 21 carbon atoms.

According to another embodiment, the aliphatic oligomeric isocyanate compound has monomeric units of formula of R(NCO)n; wherein n = 2, 3 or 4; R=an aliphatic moiety having from about 6 to about 21 carbon atoms, and having 2, 3, 4, 5, 6,7, 8, 9, 10, 11, 12 , 13, 14 or 15 repeating monomeric units.

According to one embodiment of the present disclosure, the aliphatic oligomeric isocyanate compound is selected from the group consisting of HDI trimer, HDI biuret, HDI uretidone, HDI allophanate, HDI iminooxadiazinedione, polyisocyanates based on PDI (Pentamethylene diisocyanate) and IPDI, and combinations thereof.

According to another embodiment of the present disclosure, the aliphatic oligomeric isocyanate compound may be present in an amount of from more than about 0 %w/w to about 100 %w/w of isocyanate component.

According to another embodiment of the present disclosure, the aliphatic oligomeric isocyanate compound may be present in amount of from more than about 0 wt.% to about 5 wt.%, about 6 wt.% to about 10 wt.%, about 11 wt.% to about 15 wt.%, about 16 wt.% to about 20 wt.%, about 21 wt.% to about 25 wt.%, 26 wt.% to about 30 wt.%, 31 wt.% to about 35 wt.%, 36 wt.% to about 40 wt.%, 41 wt.% to about 50 wt.%, about 51 wt.% to about 60 wt.%, about 61 wt.% to about 70 wt.%, about 71 wt.% to about 80 wt.%, about 81 wt.% to about 90 wt.%, or 91 wt.% to about 100 wt.% of the isocyanate component.

According to another embodiment of the present disclosure, the aliphatic polymeric isocyanate compound has monomeric units of formula of R(NCO)ₙ; wherein n = 2, 3 or 4; R=an aliphatic moiety having from about 2 to about 20 carbon atoms, and having at least 3 to 10000 repeating monomeric units.

According to another embodiment, the aliphatic polymeric isocyanate compound has monomeric units of formula of R(NCO)ₙ; wherein n = 2, 3 or 4; R=an aliphatic moiety having from about 2 to about 3, from about 4 to about 5, from about 6 to about 7, from about 8 to about 9, from about 10 to about 11, from about 12 to about 13, from about 14 to about 15, from about 16 to about 17, or from about 18 to about 20 carbon atoms, and having at least 3 to 10000 repeating monomeric units.

According to another embodiment of the present disclosure, the aliphatic polymeric isocyanate compound has monomeric units of formula of R(NCO)ₙ; wherein n = 2, 3 or 4; R=an aliphatic moiety having from about 2 to about 20 carbon atoms, and having at least 3 to 1000, at least 1001 to 2000, at least 2001 to 3000, at least 3001 to 4000, at least 4001 to 5000, at least 5001 to 6000, at least 6001 to 7000, at least 7001 to 8000, at least 8001 to 9000, or at least 9001 to 10000 repeating monomeric units.

According to one more embodiment of the present disclosure, the aliphatic polymeric isocyanate compound may be present in amount from more than about 0 %w/w to about 100 %w/w of isocyanate component.

According to one more embodiment, the aliphatic polymeric isocyanate compound may be present in amount from more than about 0 wt.% to about 5 wt.%, about 6 wt.% to about 10 wt.%, about 11 wt.% to about 15 wt.%, about 16 wt.% to about 20wt.%, about 21 wt.% to about 25 wt.%, 26 wt.% to about 30 wt.%, 31 wt.% to about 35 wt.%, 36 wt.% to about 40 wt.%, 41 wt.% to about 50 wt.%, about 51 wt.% to about 60 wt.%, about 61 wt.% to about 70 wt.%, about 71 wt.% to about 80wt.%, about 81 wt.% to about 90 wt.%, or 91 wt.% to about 100 wt.% of the isocyanate component.

According to one more embodiment the present disclosure, the polycarbonate polyol has at least two active hydrogens to react with the isocyanate compound. In another non-limiting embodiment, the active hydrogen(s) can be in the range of from about 1 to 5. In one non-limiting embodiment of the present application, the carbonate linkages is in the range of from about 3 to 90. In another non-limiting embodiment, the -OH content in the polycarbonate polyol is in the range of from about 0.1 to about 80%.

Further, in certain non-limiting embodiments of the present application, the polycarbonate polyol can be either an aliphatic polycarbonate polyol or an aromatic polycarbonate polyol based compound.

According to another embodiment, the polycarbonate polyol is present in amount from about 5 wt.% to about 10 wt.%, about 11 wt.% to about 15 wt.%, about 16 wt.% to about 20wt.%, about 21 wt.% to about 25 wt.%, 26 wt.% to about 30 wt.%, 31 wt.% to about 35 wt.%, 36 wt.% to about 40 wt.%, 41 wt.% to about 50 wt.%, about 51 wt.% to about 60 wt.%, about 61 wt.% to about 70 wt.%, about 71 wt.% to about 80wt.%, or about 81 wt.% to about 90 wt.% of the polyol component.

According to one embodiment the present disclosure, the polyol component of the two-component polyurethane composition further comprises at least one non-polycarbonate polyol.

According to one more embodiment, the non-polycarbonate polyol is a polyester polyol, polyether polyol, polybutadiene polyol, polyacrylate, and combinations thereof.

According to another embodiment, the non-polycarbonate polyol is present in an amount of from about 10 %w/w to about 90 %w/w of the polyol component.

According to another embodiment, the non-polycarbonate polyol is present in an amount from about 10 wt.% to about 15 wt.%, about 16 wt.% to about 20wt.%, about 21 wt.% to about 25 wt.%, 26 wt.% to about 30 wt.%, 31 wt.% to about 35 wt.%, 36 wt.% to about 40 wt.%, 41 wt.% to about 50 wt.%, about 51 wt.% to about 60 wt.%, about 61 wt.% to about 70 wt.%, about 71 wt.% to about 80wt.%, or about 81 wt.% to about 90 wt.% of the polyol component.

According to one more embodiment of the present disclosure, the polycarbonate polyol has a weight average molecular weight between 100 Da and 8000 Da with a hydroxyl functionality from 1 to 5 and the non-polycarbonate polyol has a weight average molecular weight between 100 Da and 12000 Da with a functionality from 1 to 6.

According to one more embodiment, the polycarbonate polyol has a weight average molecular weight from about 100 Da to about 500 Da, from about 501 Da to about 1000 Da, from about 1001 Da to about 1500 Da, from about 1501 Da to about 2000 Da, from about 2001 Da to about 2500 Da, from about 2501 Da to about 3000 Da, from about 3000 Da to about 3500 Da, from about 3501 Da to about 4000 Da, from about 4001 Da to about 4500 Da, from about 4501 Da to about 5000 Da, from about 5001 Da to about 5500 Da, from about 5501 Da to about 6000 Da, from about 6001 Da to about 6500 Da, from about 6501 Da to about 7000 Da, from about 7001 Da to about 7500 Da, or from about 7501 Da to about 8000 Da.

Examples of tradenames of commercially available polycarbonate polyols include Aramaco, Eternacoll, Kuraray, Unoxol & Desmophen. A known distributor of such materials is TriiSO.

According to one more embodiment, the non-polycarbonate polyol has a weight average molecular weight from about 100 Da to about 500 Da, from about 501 Da to about 1000 Da, from about 1001 Da to about 1500 Da, from about 1501 Da to about 2000 Da, from about 2001 Da to about 2500 Da, from about 2501 Da to about 3000 Da, from about 3000 Da to about 3500 Da, from about 3501 Da to about 4000 Da, from about 4001 Da to about 4500 Da, from about 4501 Da to about 5000 Da, from about 5001 Da to about 5500 Da, from about 5501 Da to about 6000 Da, from about 6001 Da to about 6500 Da, from about 6501 Da to about 7000 Da, from about 7001 Da to about 7500 Da, or from about 7501 Da to about 8000 Da, from about 8000 Da to about 8500 Da, from about 8501 Da to about 9000 Da, from about 9001 Da to about 9500 Da, from about 9501 Da to about 10000 Da, from about 10001 Da to about 10500 Da, from about 10501 Da to about 11000 Da, from about 11001 Da to about 11500 Da, or from about 11501 Da to about 12000 Da.

According to another embodiment, the polyol component further comprising a chain extender selected from the group consisting of ethylene glycol, diethylene glycol , triethylene glycol, propylene glycol, dipropylene glycol, 1,4 Butanediol, 2-Methyl-1,3-propylene diol, and N,N'-bis(2-hydroxypropylaniline), 4,4'-methylene-bis-(3-chloro-2,6-diethylaniline), 1,4-di(2-hydroxyethyl)hydroquinone, diethanolamine, triethanolamine, 1,1,1-trimethylol propane, glycerol, dimethylol butanoic acid (DMBA), hydrazine, ethylene diamine (EDA), 1,4-cyclohexane diamine, isophorone diamine, 4,4'-bis(sec-butylamine)dicyclohexylmethane, 4,4'-bis(sec-butylamine)diphenylmethane, diethyltoluene diamine, 4,4'-methylene bis(2-chloroaniline), 4-chloro-3,5-diamino-benzoic acid isobutylester, 3,5-dimethylthio-toluene diamine, trimethylene glycol-di-p-aminobenzoate, 4,4'-Methylene bis(3-chloro-2,6-diethylaniline), 1-(α-naphthyl)-3,3-di(2-hydroxyethyl)-triazene-1, 1-phenyl-3,3-di(2-hydroxyethyl)-triazene-1PT-D, 1,4-bis(2-hydroxyethoxy)benzene, diethoxylated resorcinol, 1,4-butanediamine, diaminopropane, cyclohexane diphenylalanine, and 4,4'-methylene-bis-(2-chloroaniline).

According to one more embodiment of the present disclosure, the chain extender is present in amount of from about 1 %w/w to about 15 %w/w of the polyol component.

According to one more embodiment, the chain extender is present in amount of from about 1 % w/w to about 5 %w/w, about 5 % w/w to about 10 %w/w, or about 10% w/w to about 15 %w/w of the polyol component.

According to another embodiment of the present disclosure, the polyol component further comprises an amine free catalyst selected from the group consisting of zinc based, tin based, bismuth based, and any other metal based catalyst and combinations thereof.

According to one more embodiment, the amine free catalyst is selected from the group consisting of dioctyltin di(ethylhexanoate) , dioctyltin dithioglycolate, dioctyltin dilaurate (dotl), dioctyltin oxide, dibutyltin dilaurate (dbtl), monobutyltin tris(2-ethylhexanoate) , dioctyltin diketanoate, dioctyltin diacetate (dota), dioctyltin oxide (doto), dibutyltin diacetate (dbta), dibutyltin oxide (dbto), monobutyltin oxide (mbto), dioctyltin dicarboxylate, dioctyltin stannoxane, dimethyltin neodecanoate, Stannous octoate, Stannous oxalate, Stannous oxide, bis(dodecylsulfanyl)dimethylstannane, bis(dodecylthio)dioctylstannane, methyltin mercaptide, zinc neodecanoate, zinc octoate, zinc acetylacetonate, zinc oxalate, zinc acetate, bismuth carboxylate, bismuth oxide, Bismuth Tris(2-ethylhexanoate), potassium octoate, potassium neodecanoate, aluminum ethyl acetoacetate, and combinations thereof.

According to another embodiment of the present disclosure, the catalyst is present in an amount of from about 0.005 %w/w to about 3 %w/w of polyol component.

According to another embodiment, the catalyst is present in an amount of from about 0.005 %w/w to about 0.001 %w/w, from about 0.099 %w/w to about 0.99 %w/w, from about 1 %w/w to about 2 %w/w, from 2.1 %w/w to about 3 %w/w of the polyol component.

According to one more embodiment of the present disclosure, the polyurethane composition further comprises an additive selected from the group consisting of a filler, an antioxidant, a wax, an ultraviolet light inhibitor, a plasticizer, a thickening agent, a compatibilizer, a dispersing agent, a rheology modifier, a flame retardant, an optical brightener, a pigment and a water scavenger.

According to another embodiment of the present disclosure, the polyurethane composition is free of an aromatic isocyanate compound selected from the group consisting of diphenylmethane diisocyanate (MDI), toluene diisocyanate (TDI), naphthalene diisocyanate, diisocyanato benzene, triisocyanato benzene, triisocyanato methylbenzene, bis(isocyanato methyl)benzene, and combinations thereof.

According to one more embodiment of the present disclosure, the composition is useful as an adhesive composition, coating composition, primer composition, paint composition and varnish composition.

According to another embodiment of the present disclosure, the two-component polyurethane adhesive composition comprises (A) a polyol component comprising: (i) at least one polycarbonate polyol, (ii) an amine free catalyst, and (iii) optionally, at least one aliphatic monomeric isocyanate compound; (B) at least one isocyanate component selected from the group consisting of: (i) an aliphatic oligomeric isocyanate compound, (ii) an aliphatic polymeric isocyanate compound, and combinations thereof; and wherein the polyurethane composition is free of an aromatic isocyanate compound.

An advantage of the current adhesive is that it is an aliphatic urethane adhesive with suitable handling time. The disclosed adhesive may have a handling time of less than two (2) hours at substantially ambient temperatures. Preferably the handling time may be less than 90 minutes, even more preferably no more than one (1) hour.

The invention may further include other aspects such as those enumerated below. Such as embodiments disclosed herein may have less than 1 wt% of an aromatic urethane compound, preferably less than 0.1 wt% of such aromatic urethane.

An aspect of the invention includes a two-component polyurethane composition. The composition includes a polyol component. The polyol component includes
(i) at least one polycarbonate polyol, (ii) a catalyst having less than 0.05 wt% of an amine, and (iii) optionally, at least one aliphatic monomeric isocyanate compound. The polyol component also includes (B) at least one isocyanate component. The isocyanate components is at least one selected from the group of: (i) an aliphatic oligomeric isocyanate compound, (ii) an aliphatic polymeric isocyanate compound, and combinations thereof. Preferably the polyurethane composition has less 1 wt% of an aromatic isocyanate compound.

In a second aspect, the two-component polyurethane composition according to the above aspect the polyol component further includes at least one non-polycarbonate polyol.

In a third aspect, the two-component polyurethane composition according to either the first aspect or the second aspect, wherein the aliphatic monomeric isocyanate compound has monomeric units of the formula R(NCO)ₙ; wherein n = 2, 3, and 4; and R=an aliphatic moiety having from about 2 to about 20 carbon atoms.

In a fourth aspect, the two-component polyurethane composition according to anyone of aspects 1-3 wherein the aliphatic monomeric isocyanate compound is selected from the group of isophorone diisocyanate (IPDI), dicyclohexylmethane-4,4'-diisocyanate, hexamethylene-1,6-diisocyanate (HDI), cyclohexylene diisocyanate, diisocyanato methylcyclohexane, bis(isocyanato methyl)cyclohexane, diisocyanato ethane, diisocyanato propane, diisocyanato butane, diisocyanato pentane, diisocyanato octane, diisocyanato decane, diisocyanato dodecane, 4,4'-HMDI, lysine diisocyanate and combinations thereof.

In a fifth aspect, the two-component polyurethane composition according to anyone of aspects 1-4, wherein the aliphatic monomeric isocyanate compound is present in an amount from about 0.5%w/w to about 5%w/w of the polyol component.

In a sixth aspect, the two-component polyurethane composition according to any one of aspects 1-5, wherein the aliphatic oligomeric isocyanate compound has monomeric units of the formula R(NCO)ₙ; wherein n = 2, 3, and 4; R=an aliphatic moiety having from about 6 to about 21 carbon atoms, and having at least 2 to 15 repeating monomeric units.

In a seventh aspect the two-component polyurethane composition according to anyone of aspects 1-6, wherein the aliphatic oligomeric isocyanate compound is selected from the group of HDI trimer, HDI biuret, HDI uretidone, HDI allophanate, HDI iminooxadiazinedione, polyisocyanates based on PDI and IPDI, and combinations thereof.

In an eighth aspect, the two-component polyurethane composition according to anyone of aspects 1-7, wherein the aliphatic oligomeric isocyanate compound present in an amount of from more than about 0 %w/w to about 100 %w/w of the isocyanate component.

In a ninth aspect, the two-component polyurethane composition according to anyone of aspects 1-5, 7 or 8, wherein the aliphatic polymeric isocyanate compound has monomeric units of the formula R(NCO)ₙ; wherein n = 2, 3, and 4; R=an aliphatic moiety having from about 2 to about 20 carbon atoms, and having at least 3 to 10000 repeating monomeric units.

In a tenth aspect, the two-component polyurethane composition according to anyone of aspects of 1-9, wherein the polycarbonate polyol has at least two active hydrogens to react with the isocyanate compound.

In an eleventh aspect, the two-component polyurethane composition according to anyone of aspects 1-10, wherein the polycarbonate polyol is present in amount from about 5 %w/w to about 90 %w/w of the polyol component.
In a twelfth aspect, the two-component polyurethane composition according to anyone of aspects 1-11, wherein the polyurethane composition has less 0.1 wt% of the aromatic isocyanate compound.

### EXAMPLES

The invention is described with reference to the following examples, in a non-limiting manner. The following examples exemplify the water-based humidity resistant adhesive composition for bonding a sheet membrane to a substrate, a method of bonding to a substrate with the composition, a method of preparing the composition thereof. described herein. The examples are for the purposes of illustration only and are not intended to be limiting. Many variations will suggest themselves and are within the full intended scope.

### EXAMPLE 1

| **Isocyanate Part** | |
|---|---|
| **Composition** | **% weight** |
| Hexamethylene diisocyanate oligomers, biuret type | 29.60 |
| Aliphatic polyisocyanate, polymer | 27.10 |
| Talc | 29.60 |
| Fume silica | 5.00 |
| molecular sieves | 8.70 |
| **Total** | **100.00** |

| **Polyol Part** | |
|---|---|
| **Composition** | **% weight** |
| Polycarbonate polyol | 20.03 |
| Polypropylene polyether polyol | 47.08 |
| 4,4'-Methylenebis(3-chloro-2,6-diethylaniline) | 5.09 |
| hexamethylene-1,6-diisocyanate | 0.84 |
| Dolomite Calcium/Magnesium carbonate | 21.29 |
| Fume silica | 1.50 |
| Micronized amide wax powder | 0.50 |
| molecular sieves | 2.93 |
| Tin bis(2-ethylhexanoate) | 0.35 |
| Zinc neodecanoate | 0.30 |
| Pigment | 0.09 |
| **Total** | **100.00** |

### EXAMPLE 2

| **Isocyanate Part** | |
|---|---|
| **Ingredients** | **% weight** |
| Hexamethylene diisocyanate oligomers, biuret type | 29.60 |
| Aliphatic polyisocyanate, polymer | 27.10 |
| Talc | 29.60 |
| Fume silica | 5.00 |
| molecular sieves | 8.70 |
| **Total** | **100.00** |

| **Polyol Part** | |
|---|---|
| **Ingredients** | **% weight** |
| Polycarbonate polyol | 20.03 |
| Polypropylene polyether polyol | 47.08 |
| 4,4'-Methylenebis(3-chloro-2,6-diethylaniline) | 3.20 |
| Dolomite Calcium/Magnesium carbonate | 22.52 |
| Fume silica | 1.50 |
| Micronized amide wax powder | 2.00 |
| molecular sieves | 2.93 |
| Tin bis(2-ethylhexanoate) | 0.35 |
| Zinc neodecanoate | 0.30 |
| Pigment | 0.09 |
| **Total** | **100.00** |

### EXAMPLE 3

| **Isocyanate Part** | |
|---|---|
| **Ingredients** | **% weight** |
| Hexamethylene diisocyanate oligomers, trimer type | 29.60 |
| Aliphatic polyisocyanate, polymer | 27.10 |
| Talc | 29.60 |
| Fume silica | 5.00 |
| molecular sieves | 8.70 |
| **Total** | **100.00** |

| **Polyol Part** | |
|---|---|
| **Ingredients** | **% weight** |
| Polycarbonate polyol | 20.03 |
| Polypropylene polyether polyol | 47.08 |
| 4,4'-Methylenebis(3-chloro-2,6-diethylaniline) | 3.20 |
| Dolomite Calcium/Magnesium carbonate | 22.52 |
| Fume silica | 1.50 |
| Micronized amide wax powder | 2.00 |
| molecular sieves | 2.93 |
| Tin bis(2-ethylhexanoate) | 0.35 |
| Zinc neodecanoate | 0.30 |
| Pigment | 0.09 |
| **Total** | **100.00** |

### Lap shear:

Lap shear was performed as per the standards of EN 1465 (10mm/min using Zwick Universal Tensile Tester Z020)

7 days cataplasma - Lap shear bonds are rolled in cotton sheets, fitting 4-6 bonds in each roll. The rolls are placed in sealed plastic bags, and water is added to the bag (10x the weight of the cotton). All samples are stored at 70°C for 7 days, followed immediately by -20°C for 2hrs, then finally held at 23°C for 4hrs before testing.

Lap shear handling time - Measure lap shear strength shortly after applying the adhesive, then continue to repeat testing after set time intervals until the desired strength has been reached. This method displays the time and rate at which the adhesive builds strength.

Mechanicals - Test method ASTM D638 IV (50mm/min using Zwick Universal Tensile Tester Z020)

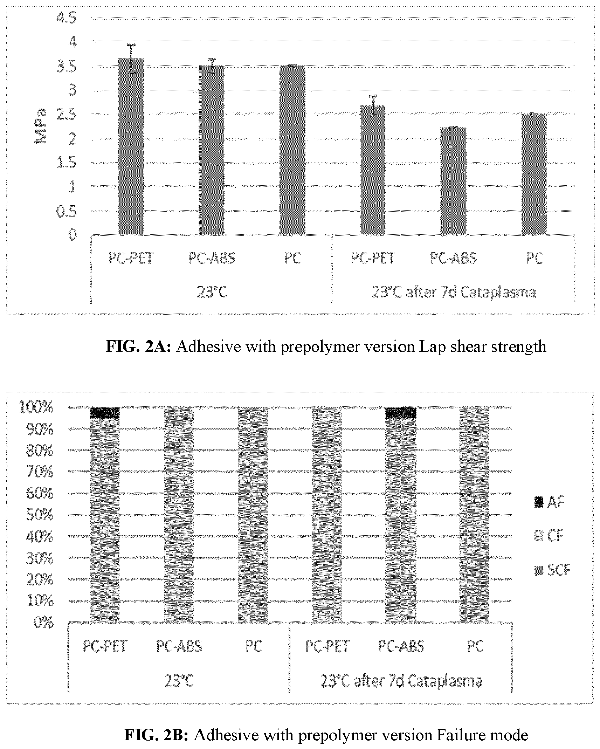

FIG. 1 is a lap shear failure mode description. FIG. 2A is a bar chart of the adhesive lap shear strength for the samples of Example 2 and FIG. 2B is a bar chart of the failure mode for the samples of Example 2.

Conventional polyurethane adhesives typically fail adhesively after hot/wet conditions on PC and PC blend substrates whereas we maintain the adhesion after 7d cataplasma (hot/wet ageing conditions). The test results were shown in FIG. 1A, 2A and 2B

FIG. 2A illustrates the lap shear adhesive results at ambient temperature and at ambient temperature after the samples were aged in accordance with 7d cataplasma as described above. Surprisingly enough, each sample exceeded lap shear adhesive strength of at least 1 MPa after the 7d cataplasma exposure. Surprisingly, each sample exhibited a lap shear strength of at least 15. MPa and 2.0 MPa.

Regarding the failure modes, FIG. 2B, adhesive failure was observed in only 2 instances and in less than 10% of the samples tested. Most impressively no more than 5% of samples tested after 7d cataplasma exposure exhibited adhesive failure. Samples PC-PET and PC bonding exhibited 0 adhesive failures. The PC-ABS sample only exhibited one adhesive failure.

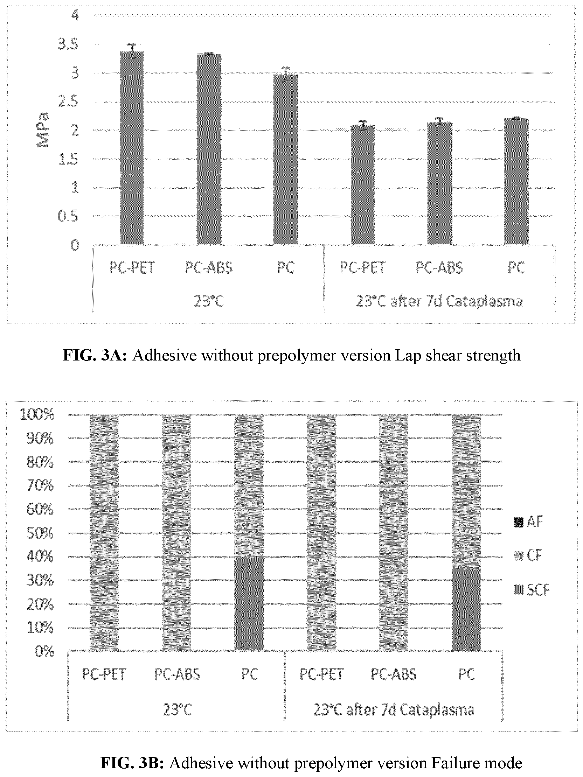

FIG. 3A is a bar chart of the adhesive lap shear strength for the samples of Example 3 and FIG. 3B is a bar chart of the failure mode for the samples of Example 3.

As for FIG. 3A, the adhesive without the prepolymer exhibited similar lap shear strength results to that of the adhesive with the prepolymer; namely each sample exceeded lap shear adhesive strength of at least 1 MPa after the 7d cataplasma exposure. Also, each sample exhibited a lap shear strength of at least 15. MPa and 2.0 MPa.

FIG. 3B illustrates that none of the samples coated with the adhesive without the prepolymer experienced adhesive failure. In both settings the example adhesive performed well.

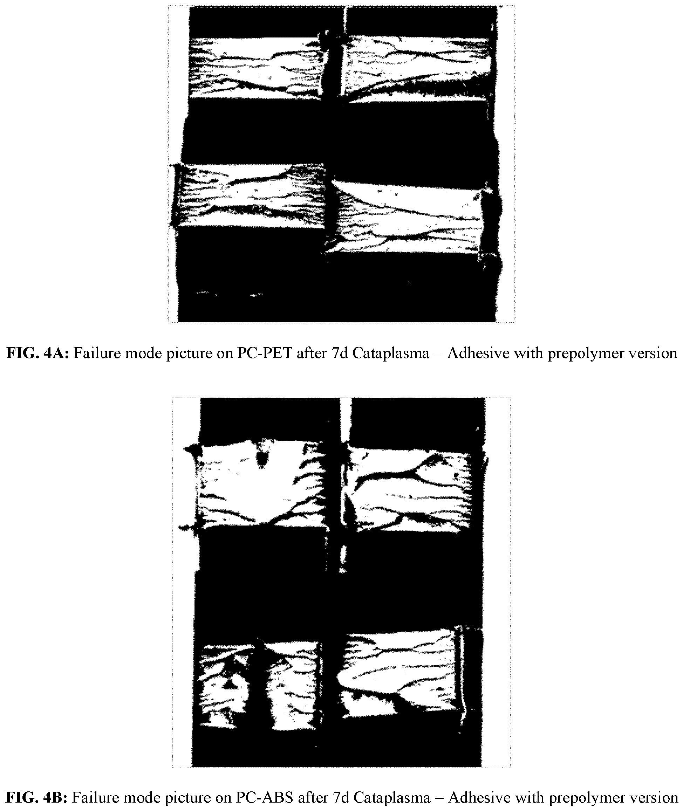

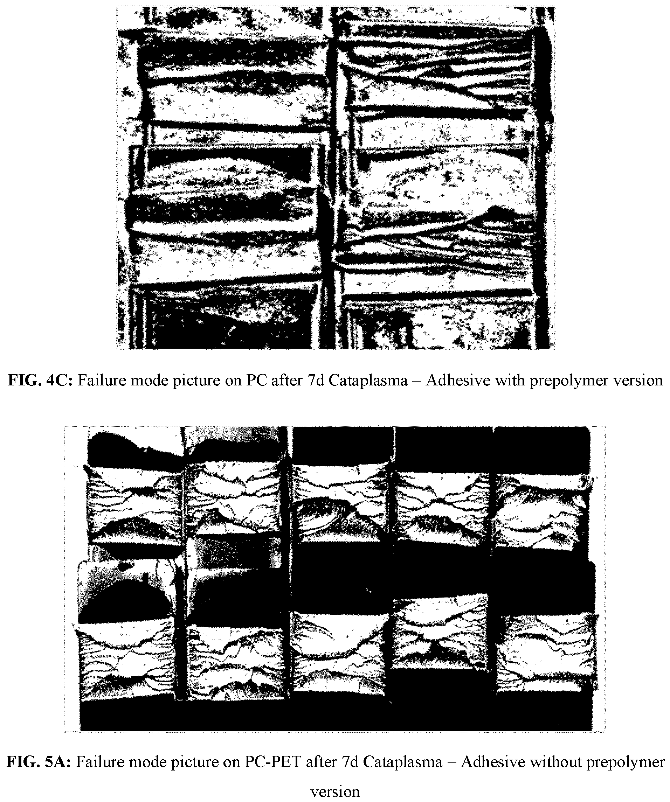

FIGs. 4A-5C are images of the tested samples, post testing. The sample at the bottom left in FIG. 4B exhibited adhesive failure. All of the other samples shown did not exhibit adhesive failure.

While this invention has been described in detail with reference to certain preferred embodiments, it should be appreciated that the present invention is not limited to those precise embodiments. Rather, in view of the present disclosure, many modifications and variations would present themselves to those skilled in the art without departing from the scope and spirit of this invention.

## Claims

1. A two-component polyurethane composition comprising:
(A) a polyol component comprising:
(i) at least one polycarbonate polyol,
(ii) an amine free catalyst, and
(iii) optionally, at least one aliphatic monomeric isocyanate compound;
(B) at least one isocyanate component selected from the group consisting of:
(i) an aliphatic oligomeric isocyanate compound, (ii) an aliphatic polymeric isocyanate compound, and combinations thereof; and wherein the polyurethane composition is free of an aromatic isocyanate compound.

2. The two-component polyurethane composition according to claim 1, wherein the polyol component further comprises at least one non-polycarbonate polyol.

3. The two-component polyurethane composition according to anyone of claims 1 or 2, wherein the aliphatic monomeric isocyanate compound has monomeric units of the formula R(NCO)ₙ; wherein n = 2, 3, and 4; and R=an aliphatic moiety having from about 2 to about 20 carbon atoms.

4. The two-component polyurethane composition according to anyone of claims 1 to 3, wherein the aliphatic monomeric isocyanate compound is selected from the group consisting of isophorone diisocyanate (IPDI), dicyclohexylmethane-4,4'-diisocyanate, hexamethylene-1,6-diisocyanate (HDI), cyclohexylene diisocyanate, diisocyanato methylcyclohexane, bis(isocyanato methyl)cyclohexane, diisocyanato ethane, diisocyanato propane, diisocyanato butane, diisocyanato pentane, diisocyanato octane, diisocyanato decane, diisocyanato dodecane, 4,4'-HMDI, lysine diisocyanate and combinations thereof.

5. The two-component polyurethane composition according to anyone of claims 1 to 4, wherein the aliphatic monomeric isocyanate compound is present in an amount from about 0.5%w/w to about 5%w/w of the polyol component.

6. The two-component polyurethane composition according to anyone of claims 1 to 5, wherein the aliphatic oligomeric isocyanate compound has monomeric units of the formula R(NCO)ₙ; wherein n = 2, 3, and 4; R=an aliphatic moiety having from about 6 to about 21 carbon atoms, and having at least 2 to 15 repeating monomeric units.

7. The two-component polyurethane composition according to anyone of claims 1 to 6, wherein the aliphatic oligomeric isocyanate compound is selected from the group consisting of HDI trimer, HDI biuret, HDI uretidone, HDI allophanate, HDI iminooxadiazinedione, polyisocyanates based on PDI and IPDI, and combinations thereof.

8. The two-component polyurethane composition according to anyone of claims 1 to 7, wherein the aliphatic oligomeric isocyanate compound present in an amount of from more than about 0 %w/w to about 100 %w/w of the isocyanate component.

9. The two-component polyurethane composition according to anyone of claims 1 to 8, wherein the aliphatic polymeric isocyanate compound has monomeric units of the formula R(NCO)ₙ; wherein n = 2, 3, and 4; R=an aliphatic moiety having from about 2 to about 20 carbon atoms, and having at least 3 to 10000 repeating monomeric units.

10. The two-component polyurethane composition according to anyone of claims 1 to 9, wherein the polycarbonate polyol has at least two active hydrogens to react with the isocyanate compound.

11. The two-component polyurethane composition according to anyone of claims 1-10, wherein the polycarbonate polyol is present in amount from about 5 %w/w to about 90 %w/w of the polyol component.

12. The two-component polyurethane composition according to anyone of claims 2 to 11, wherein the non-polycarbonate polyol is a polyester polyol, poly ether polyol, polybutadiene polyol, polyacrylate, and combinations thereof.

13. The two-component polyurethane composition according to anyone of claims 2 to 12, wherein the non-polycarbonate polyol is present in an amount of from about 10 %w/w to about 90 %w/w of the polyol component.

14. The two-component polyurethane composition according to anyone of claims 1 to 13, wherein the polycarbonate polyol has a weight average molecular weight between 100 Da and 8000 Da with a hydroxyl functionality from 1 to 5 and the non-polycarbonate polyol has a weight average molecular weight between 100 Da and 12000 Da with a functionality from 1 to 6.

15. The two-component polyurethane composition according to anyone of claims 1 to 14, wherein the polyol component further comprises a chain extender selected from the group consisting of ethylene glycol, diethylene glycol, triethylene glycol, propylene glycol, dipropylene glycol, 1,4 Butanediol, 2-Methyl-1,3-propylene diol, and N,N'-bis(2-hydroxypropylaniline), 4,4'-methylene-bis-(3-chloro-2,6-diethylaniline), 1,4-di(2-hydroxyethyl)hydroquinone, diethanolamine, triethanolamine, 1,1,1-trimethylol propane, glycerol, dimethylol butanoic acid (DMBA), hydrazine, ethylene diamine (EDA), 1,4-cyclohexane diamine, isophorone diamine, 4,4'-bis(sec-butylamine)dicyclohexylmethane, 4,4'-bis(sec-butylamine)diphenylmethane, diethyltoluene diamine, 4,4'-methylene bis(2-chloroaniline), 4-chloro-3,5-diamino-benzoic acid isobutylester, 3,5-dimethylthio-toluene diamine, trimethylene glycol-di-p-aminobenzoate, 4,4'-Methylene bis(3-chloro-2,6-diethylaniline), 1-(α-naphthyl)-3,3-di(2-hydroxyethyl)-triazene-1, 1-phenyl-3,3-di(2-hydroxyethyl)-triazene-1PT-D, 1,4-bis(2-hydroxyethoxy)benzene, diethoxylated resorcinol, 1,4-butanediamine, diaminopropane, cyclohexane diphenylalanine, and 4,4'-methylene-bis-(2-chloroaniline).

16. The two-component polyurethane composition according to claim 15, wherein the chain extender is present in an amount of from about 1 %w/w to about 15 %w/w of the polyol component.

17. The two-component polyurethane composition according to anyone of claims 1 to 16, wherein the amine free catalyst is selected from the group consisting of zinc based, tin based, bismuth based, and any other metal based catalyst and combinations thereof.

18. The two-component polyurethane composition according to anyone of claims 1 to 17, wherein the amine free catalyst is selected from the group consisting of dioctyltin di(ethylhexanoate), dioctyltin dithioglycolate, dioctyltin dilaurate (dotl), dioctyltin oxide, dibutyltin dilaurate (dbtl), monobutyltin tris(2-ethylhexanoate) , dioctyltin diketanoate, dioctyltin diacetate (dota), dioctyltin oxide (doto), dibutyltin diacetate (dbta), dibutyltin oxide (dbto), monobutyltin oxide (mbto), dioctyltin dicarboxylate, dioctyltin stannoxane, dimethyltin neodecanoate, stannous octoate, stannous oxalate, stannous oxide, bis(dodecylsulfanyl)dimethylstannane, bis(dodecylthio)dioctylstannane, methyltin mercaptide, zinc neodecanoate, zinc octoate, zinc acetylacetonate, zinc oxalate, zinc acetate, bismuth carboxylate, bismuth oxide, bismuth tris(2-ethylhexanoate), potassium octoate, potassium neodecanoate, aluminium ethyl acetoacetate, and combinations thereof.

19. The two-component polyurethane composition according to anyone of claims 1 to 18, wherein the catalyst is present in an amount of from about 0.005 %w/w to about 3 %w/w of the polyol component.

20. The two-component polyurethane composition according to anyone of claims 1 to 19, wherein the polyurethane composition further comprises an additive selected from the group consisting of a filler, an antioxidant, a wax, an ultraviolet light inhibitor, a plasticizer, a thickening agent, a compatibilizer, a dispersing agent, a rheology modifier, a flame retardant, an optical brightener, a pigment a water scavenger and combinations thereof.

21. The two-component polyurethane composition according to anyone of claims 1 to 20, wherein the polyurethane composition is free of an aromatic isocyanate compound selected from the group consisting of diphenylmethane diisocyanate (MDI), toluene diisocyanate (TDI), naphthalene diisocyanate, diisocyanato benzene, triisocyanato benzene, triisocyanato methylbenzene, bis(isocyanato methyl)benzene, and combinations thereof.

22. The two-component polyurethane composition according to anyone of claims 1 to 21, wherein the composition is useful as an adhesive composition, coating composition, primer composition, paint composition and varnish composition.
